# EUROPEAN PATENT APPLICATION

(11) **EP 4 674 719 A1**
(43) Date of publication of application: **07.01.2026**
(21) Application number: 24186275.4
(22) Date of filing: 03.07.2024
(51) Int. Cl.: B60W 50/02, B60W 50/023, B60W 50/04, B60W 60/00

(54) **COMPUTER SYSTEM AND COMPUTER-IMPLEMENTED METHOD FOR MANAGING A VEHICLE AND VEHICLE**

(71) Applicant: Volvo Truck Corporation, 405 08 Göteborg (SE)
(72) Inventor: Viberg, Björn, 413 09 Göteborg (SE); Wernström, Ida, 425 42 Hisings Kärra (SE); Hillerborg, Per, 425 65 Hisings Kärra (SE); Gray, Sean, 417 40 Göteborg (SE); Zohouri, Ahmad, 417 16 Göteborg (SE); Molina, Guillermo, 422 47 Hisings Backa (SE); Ul Muram, Faiz, 418 39 Göteborg (SE); Mahmoud, Aran, 431 51 Mölndal (SE); Patil, Dhiraj Ravindra, 414 75 Göteborg (SE); Alizadeh, Zeinab, 428 34 Mölndal (SE); Selvaraj, Sushil, 424 57 Gunnilse (SE); Maddala, Sainath, 418 70 Mölndal (SE); Selvaraj, Sivashakthi, 421 72 Västra Frölunda (SE); Karthik G V, Shravan, 417 79 Göteborg (SE)
(74) Representative: Valea AB

(57) **Abstract**

A computer system (600) comprising processing circuitry (602) configured to manage a vehicle (1) comprising an Automated Driving System (ADS). The ADS is configured to control the motion of the vehicle (1) when the vehicle (1) is configured in an autonomous mode. The processing circuitry (602) is configured to estimate State of Health (SoH) of one or more control systems of the vehicle (1). The one or more control systems are configured to control the use of the autonomous mode. The processing circuitry (602) is configured to, based on the estimated SoH, determine whether or not the vehicle (1) shall use the autonomous mode.

## Description

### TECHNICAL FIELD

The disclosure relates generally to vehicle autonomy. In particular aspects, the disclosure relates to handling an autonomous mode of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle may travel using an autonomous mode, wherein an Automated Driving System (ADS) may control a motion of the vehicle while the vehicle is in the autonomous mode. The ADS may function as a virtual driver of the vehicle such as turning the steering wheel to control the steering of the vehicle. While this is a convenient and efficient way of travelling and handling the vehicle motion, safety hazards may occur if the autonomous mode or related control systems are malfunctioning.

Hence, there is a strive to improve safety for vehicles enabled to use autonomous modes.

### SUMMARY

According to a first aspect of the disclosure, a computer system comprising processing circuitry configured to manage a vehicle comprising an ADS. The ADS is configured to control the motion of the vehicle when the vehicle is configured in an autonomous mode. The autonomous mode may be a mode of the vehicle where the vehicle may travel and control its motion without operator input.

The processing circuitry is configured to estimate State of Health (SoH) of one or more control systems of the vehicle. The one or more control systems is configured to control the use of the autonomous mode. The estimation may be performed continuously, triggered at any detectable event, or periodically.

The processing circuitry is configured to, based on the estimated SoH, determine whether or not the vehicle shall use the autonomous mode.

The first aspect of the disclosure may seek to improve safety for vehicles enabled to use autonomous modes.

A technical benefit may include improved safety of the vehicle, this is since if the SoH indicates that the control systems are malfunctioning, then there is a clear hazard of using the autonomous mode, and hence, it can be determined that autonomous mode shall not be used.

Optionally in some examples, including in at least one preferred example, the processing circuitry is further configured to, when the vehicle is configured in autonomous mode, and when determined that the vehicle shall not use the autonomous mode, trigger a handover procedure of control of the motion of the vehicle to an operator of the vehicle.

A technical benefit may include improved safety of the vehicle, this is since the operator of the vehicle can take over and avoid and risk when determined that the vehicle shall not use the autonomous mode.

Optionally in some examples, including in at least one preferred example, the processing circuitry is further configured to, when determined that the vehicle shall not use the autonomous mode and the vehicle is configured in an operator controlled mode, in response to detecting an attempt to switch to the autonomous mode, refrain from switching to the autonomous mode.

A technical benefit may include improved safety of the vehicle, this is since autonomous mode is only used when determined, based on the estimated SoH, that it is safe to do so, e.g., when there are no malfunctions or risks of malfunctions of the one or more control systems controlling the autonomous mode.

Optionally in some examples, including in at least one preferred example, the one or more control systems comprises a primary autonomous control system and a redundant autonomous control system. In these examples, the processing circuitry is further configured to estimate the SoH of the one or more control systems by estimating the SoH of the primary autonomous control system and/or the redundant autonomous control system. In these examples, the processing circuitry is further configured to, based on the estimated SoH of the primary autonomous control system and/or the redundant autonomous control system, determine whether or not the vehicle shall use the autonomous mode.

A technical benefit may include improved safety of the vehicle, this is since the autonomous mode may only be used if determined that the estimated SoH indicates that the usage of the primary autonomous control system and/or the redundant autonomous control system is safe such as that both indicates an intended functionality/accuracy and/or there is sufficient redundancy for predefined safety functionalities of the vehicle.

Optionally in some examples, including in at least one preferred example, the one or more control systems comprises a driver intervention system arranged to control a switch from the autonomous mode to an operator controlled mode. In these examples, the processing circuitry is further configured to estimate the SoH of the one or more control systems by estimating the SoH of the driver intervention system. In these examples, the processing circuitry is further configured to, based on the estimated SoH of the driver intervention system, determine whether or not the vehicle shall use the autonomous mode.

A technical benefit may include improved safety of the vehicle, this is since the autonomous mode may only be determined to be used if the SoH indicates that the driver intervention system is functioning as intended and/or that the risk for a malfunction is low.

Optionally in some examples, including in at least one preferred example, the driver intervention system is arranged to control the switch from the autonomous mode to the operator controlled mode, by receiving one or more signals issued by one or more control interfaces of the vehicle wherein the one or more signals are issued in response to the operator interacting with said one or more control interfaces.

A technical benefit may include improved safety of the vehicle, this is since the autonomous mode can efficiently and safely be interrupted and handed over to the operator by the operator interacting with the one or more control interfaces, thus issuing the one or more signals which causes the switch to the operator controlled mode.

Optionally in some examples, including in at least one preferred example, the processing circuitry is configured to estimate the SoH of the driver intervention system by diagnosing an ability of the driver intervention system to receive the one or more signals.

A technical benefit may include improved safety of the vehicle, this is since the autonomous mode can be avoided or switched to the operator controlled mode if the diagnosis indicates that the driver intervention systems is unable to receive at least some or all signals, or that some or all signals are received with poor accuracy.

Optionally in some examples, including in at least one preferred example, the processing circuitry is configured to estimate the SoH of the driver intervention system by detecting that the one or more signals indicate a fault associated with the one or more control interfaces.

A technical benefit may include improved safety of the vehicle, this is since the autonomous mode can be avoided or switched to the operator controlled mode if it is detected that there is a fault. The fault may be detected e.g., by detecting that the signals indicates impossible values or detecting signals when they should not be detected, etc.

Optionally in some examples, including in at least one preferred example, the one or more control interfaces comprises one or more pedals and/or a steering wheel of the vehicle. In these examples, receiving the one or more signals issued by one or more control interfaces comprises receiving values of one or more pedal positions of the one or more pedals and/or receiving values of a steering wheel torque.

A technical benefit may include improved safety of the vehicle, this is since it can be diagnosed or detected if the signals of the pedal positions or the steering wheel torque is working as intended or if there are any potential issues with the control interfaces.

Optionally in some examples, including in at least one preferred example, the processing circuitry is configured to estimate the SoH of the driver intervention system by being configured to detect whether or not the one or more pedal positions and/or the steering wheel torque comply with predefined heuristics.

A technical benefit may include improved safety of the vehicle, this is since if the pedal positions and/or steering wheel torque may have typical ranges of what are possible values representing the positions or torque, and if the values differ by a threshold, then there is likely a problem and autonomous mode should not be used as it may be difficult to use the driver intervention system to take back control, or the control may be released without the operator attempting to take over. Hence, if the one or more pedal positions and/or the steering wheel torque does not comply with predefined heuristics, then the autonomous mode should be determined to not be used.

According to a second aspect of the disclosure a vehicle comprising an Automated Driving System is provided. The ADS is configured to control the motion of the vehicle when the vehicle is configured in an autonomous mode. The vehicle further comprises and/or is controlled by the computer system according to the first aspect.

Optionally in some examples, including in at least one preferred example, the vehicle comprises a primary autonomous control system and a redundant autonomous control system. In these examples, when the vehicle is configured in the autonomous mode, the redundant autonomous control system is arranged to be used as a redundant system if the primary autonomous control system is fails.

Optionally in some examples, including in at least one preferred example, the vehicle comprises a driver intervention system arranged to control a switch from the autonomous mode to an operator controlled mode.

According to a third aspect of the disclosure, a computer-implemented method for managing a vehicle comprising an ADS is provided. The ADS is configured to control the motion of the vehicle when the vehicle is configured in an autonomous mode.

The method comprises: by a processing circuitry of a computer system, estimating SoH of one or more control systems of the vehicle, the one or more control systems being configured to control the use of the autonomous mode.

The method comprises: by the processing circuitry and based on the estimated SoH, determining whether or not the vehicle shall use the autonomous mode.

Optionally in some examples, including in at least one preferred example, the method further comprises by the processing circuitry, when the vehicle is configured in autonomous mode, and when determined that the vehicle shall not use the autonomous mode, triggering a handover procedure of control of the motion of the vehicle to an operator of the vehicle.

Optionally in some examples, including in at least one preferred example, the method further comprises by the processing circuitry, when determined that the vehicle shall not use the autonomous mode and when the vehicle is configured in an operator controlled mode, in response to detecting an attempt to switch to the autonomous mode, refraining from switching to the autonomous mode.

Optionally in some examples, including in at least one preferred example, the method further comprises a primary autonomous control system and a redundant autonomous control system and wherein estimating the SoH of the one or more control systems comprises estimating the SoH of the primary autonomous control system and/or the redundant autonomous control system, and wherein determining whether or not the vehicle shall use the autonomous mode is based on the estimated SoH of the primary autonomous control system and/or the redundant autonomous control system.

Optionally in some examples, including in at least one preferred example, the one or more control systems comprises a driver intervention system arranged to control a switch from the autonomous mode to an operator controlled mode, and wherein estimating the SoH of the one or more control systems comprises estimating the SoH of the driver intervention system, and wherein determining whether or not the vehicle shall use the autonomous mode is based on the estimated SoH of the driver intervention system.

The disclosed aspects may comprise corresponding examples, features and/or technical benefits of the other respective aspects, in a corresponding manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a flow chart of a method according to an example.
**FIG. 4** is a block diagram illustrating examples herein.

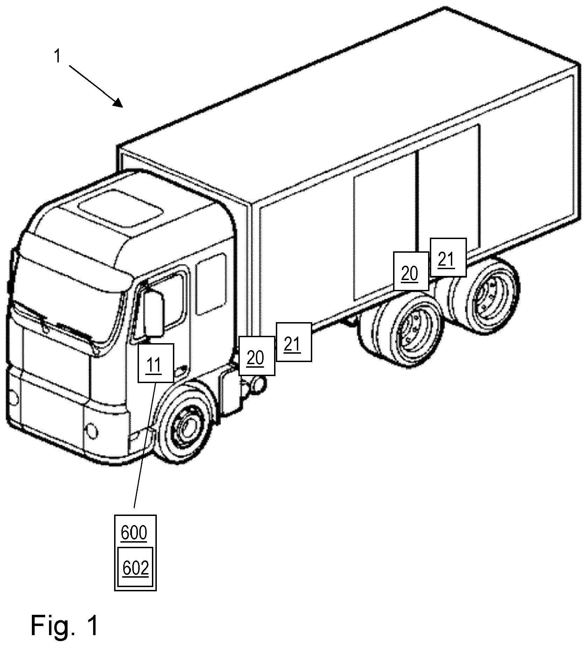

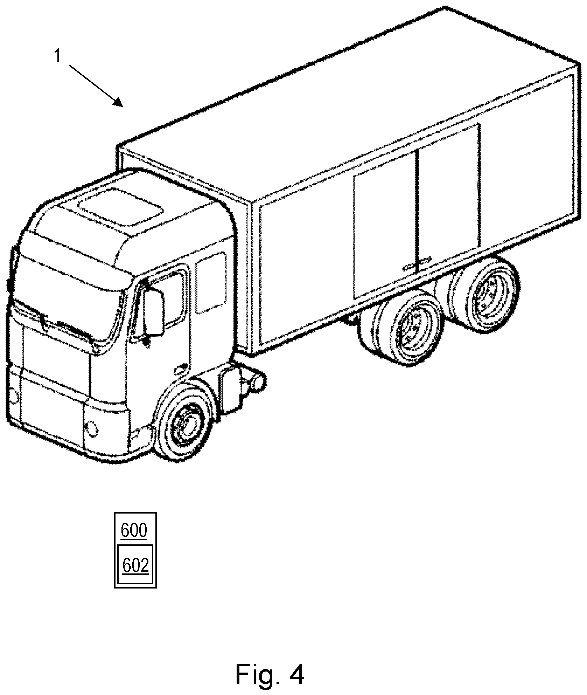

**FIG. 4** is another view of **FIG. 1****,** according to an example.

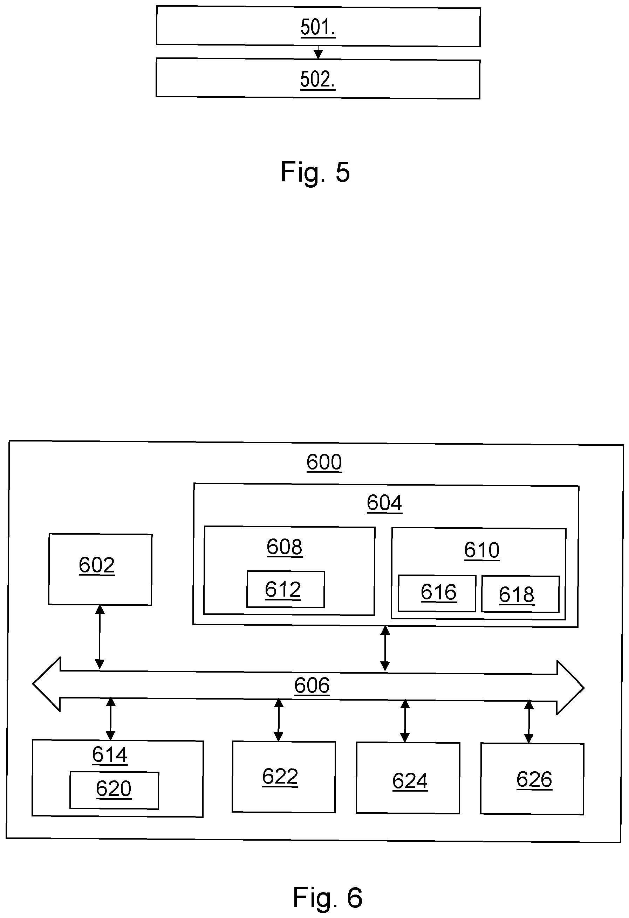

**FIG. 5** is a flow chart of a method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

To ensure safety of vehicles using ADS, examples herein may enable a safe mode handling by offering the ADS different capabilities by monitoring the health of a vehicle, operator presence, and intervention status.

**FIG. 1** is an exemplary **vehicle 1** according to an example.

The vehicle 1 may be any suitable vehicle 1, e.g., a truck, a car, a bus, a heavy-duty vehicle, a marine vessel, a combination vehicle towing one or more trailers, etc.

The vehicle 1 comprises an ADS configured to control the motion of the vehicle 1 when the vehicle 1 is configured in an autonomous mode. The autonomous mode may be a mode where an operator of the vehicle is not actively controlling the vehicle 1 and instead, the ADS may control the motion such as steering, braking and/or propulsion.

The autonomous mode is typically switched on by an operator of the vehicle 1, e.g., when the operator wants the ADS to take over.

Comprising the ADS as used herein means that some control unit may run the ADS as software for controlling the motion of the vehicle 1 when in the autonomous mode.

In contrast, there may be an operator controlled mode where the operator controls the vehicle 1, e.g., using pedals and steering wheel.

When in the autonomous mode, the ADS may serve as a virtual driver of the vehicle 1. The ADS may further be able to control the suspension of the vehicle 1 and/or a chassis and/or may control any suitable Vehicle Motion Management (VMM) functionality, function or unit of the vehicle 1.

The vehicle 1 may comprise **one or more sensors 20**.

The one or more sensors 20 may comprise any one or more sensors suitable for sensing a road such that the ADS can safely control the vehicle motion in response to sensed road and objects and environment surrounding the vehicle 1, e.g., any one or more out of: cameras, lidars, radars, inertial measurement unit (IMU), wheel speed sensors, speedometers, etc.

The vehicle 1 may comprise **one or more actuators 21.**

The one or more actuators 21 may comprise any one or more sensors suitable for sensing a road such that the ADS can control the vehicle motion, e.g., any one or more out of: steering actuators, acceleration actuators, braking actuators, etc.

The vehicle 1 motion may be controlled by one or more control interfaces 11. The one or more control interfaces 11 may control any one of steering, acceleration, chassis functionality, suspension, any suitable VMM functionality or unit, or a combination thereof.

The one or more control interfaces 11 may comprise pedals or control units of pedals in the vehicle 1, e.g., brake or acceleration pedals.

The one or more control interfaces 11 may comprise a steering wheel or a control unit of the steering wheel in the vehicle 1.

The one or more control interfaces 11 may comprise any other suitable entity or associated control unit which an operator may interact with, and optional which the ADS may also interact with or at least imitate such an interaction. In other words, as the ADS controls the motion of the vehicle, the control interfaces 11 may move as if operated by an operator, in particular this may be the case for a steering wheel of the vehicle 1.

The vehicle 1 may comprise and/or may be controlled by a **computer system 600** and/or a **processing circuitry 602** therein.

The computer system 600 and/or the processing circuitry 602 therein may control and/or communicate with any one or more entities associated with the vehicle 1, e.g., any one or more out of: the ADS, the one or more sensors 20, the one or more actuators 21, etc.

In some examples, the computer system 600 and/or the processing circuitry 602 may be an Electronic Control Unit (ECU) of the vehicle 1.

The vehicle 1 or computer system 600 may comprise one or more control systems configured to control the use of the autonomous mode, e.g., whether or not it shall be used, or how it shall be used.

The one or more control systems may comprise a driver intervention system 300 arranged to control a switch from the autonomous mode to an operator controlled mode.

The one or more control systems comprises a primary autonomous control system and optionally a redundant autonomous control system for controlling the vehicle in the autonomous mode.

Depending on a SoH of the one or more control system, examples herein may determine whether or not the autonomous mode shall be used, and in some cases, also how it shall be used, e.g., which of the primary or secondary autonomous control systems shall control the motion of the vehicle 1.

Examples herein may further relate to monitoring inputs to the vehicle 1 such as to guarantee that the vehicle operator always can resume control of the vehicle 1.

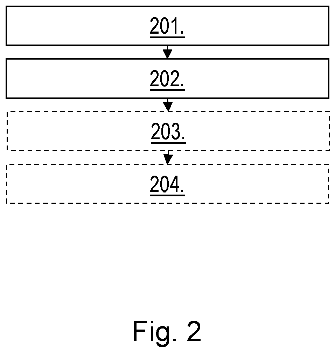

**FIG. 2** is a flow chart of a method for managing the vehicle 1 comprising the ADS. The ADS is configured to control the motion of the vehicle 1 when the vehicle 1 is configured in the autonomous mode. The autonomous mode may be a mode of the vehicle 1 where operator input is reduced or not needed for controlling the motion of the vehicle 1. In the autonomous mode the vehicle 1 may be configured to move input interfaces at least partly as if controlled by a driver, in particular a steering wheel may rotate according to steering of the vehicle 1.

The method may comprise the following actions in any suitable order. Dashed boxes in FIG. 2 may indicate optional actions. The method and following actions may be performed by the computer system 600 and/or the processing circuitry therein.

### Action 201

The method comprises estimating SoH of one or more control systems of the vehicle 1.

The estimation may be performed continuously, triggered at any detectable event e.g., when the one or more control systems perform any action, or periodically.

The SoH may be a quantified value indicating a degree of how well a respective control system is functioning or malfunctioning. The SoH may be estimated based on predefined heuristics for every respective control system, e.g., with respect to some measurements, input, output, or a combination thereof, related to, used by, or produced by, the respective control system.

The one or more control systems is configured to control the use of the autonomous mode.

The one or more control systems may comprise any suitable systems configured to control the use of the autonomous mode, e.g., whether or not such a mode shall be used or how it shall be used. The one or more controls systems may be part of the computer system 600 and/or the processing circuitry 602 therein.

The one or more control systems comprises a primary autonomous control system and a redundant autonomous control system. These autonomous control systems may be used for controlling the vehicle 1 in the autonomous mode, e.g., as part of the ADS and/or as part of controlling the ADS. In some of these examples, estimating the SoH of the one or more control systems may comprise estimating the SoH of the primary autonomous control system and/or the redundant autonomous control system.

In some examples, the one or more control systems comprises a driver intervention system arranged to control a switch from the autonomous mode to an operator controlled mode. In these examples, estimating the SoH of the one or more control systems may comprise estimating the SoH of the driver intervention system.

In some examples, the driver intervention system is arranged to control the switch from the autonomous mode to the operator controlled mode, by receiving one or more signals issued by the one or more control interfaces 11 of the vehicle 1. The one or more signals may be issued in response to the operator interacting with said one or more control interfaces 11, e.g., typically grabbing the steering wheel and/or using pedals to take over from the autonomous mode.

The one or more signals may be sent over a Controller Area Network (CAN), i.e., they may be CAN signals, but they may also be other signals sent over any other suitable network.

The one or more control interfaces 11 may comprise one or more pedals and/or a steering wheel of the vehicle 1. In these examples, receiving the one or more signals issued by one or more control interfaces 11 may comprise receiving values of one or more pedal positions of the one or more pedals and/or receiving values of a steering wheel torque. The one or more control interfaces 11 may also comprises a steer by wire system and in these examples, corresponding values may be received as part of the one or more signals.

In some examples, the driver intervention system will be configured to trigger the handover to the operator controlled mode if there is a change in the pedal position and/or a steering wheel torque that is likely caused by an operator, e.g., detecting that the operator is steering in a different manner than the ADS is attempting to steer and/or detecting that a steering of the ADS is subject to an opposing force.

In some examples, estimating the SoH of the driver intervention system 300 may comprise diagnosing an ability of the driver intervention system to receive the one or more signals.

Diagnosing the ability of the driver intervention system to receive the one or more signals may comprise diagnosing that there may be errors with CAN signals. The signals may themselves indicate an error or it may be determined using heuristics that the signals indicates a reduced ability to receive the one or more signals.

Diagnosing the ability of the driver intervention system to receive the one or more signals may comprise detecting that expected signals are not received, e.g., periodic signals.

In some examples, estimating the SoH of the driver intervention system 300 may comprise detecting that the one or more signals indicate a fault associated with the one or more control interfaces 11.

Detecting that the one or more signals indicate the fault associated with the one or more control interfaces 11 may comprise detecting that values of the one or more signals comprise noise or comprise a value outside a predefined limit, e.g., outside a range of values the signals can physically span.

Detecting that the one or more signals indicate the fault associated with the one or more control interfaces 11 may comprise detecting that values of the one or more signals comprise spikes in their values, i.e., where one or more values are different from the rest of the values of a time period by a set threshold.

Detecting that the one or more signals indicate a fault associated with the one or more control interfaces 11 may comprise detecting that values change with a rate above a threshold. This means that there is no chance a human can manage to interact in such a way to produce such values, e.g., if pedals are indicated to move quicker than what is deemed possible.

Detecting that the one or more signals indicate a fault associated with the one or more control interfaces 11 may comprise detecting that the one or more signals comprises an explicit flag indicating a fault, and optionally a cause for said fault.

In some examples, estimating the SoH of the driver intervention system may comprise detecting whether or not the one or more pedal positions and/or the steering wheel torque comply with predefined heuristics, e.g., there are no sudden changes and/or the values are within set limits.

### Action 202

The method comprises, based on the estimated SoH, determining whether or not the vehicle 1 shall use the autonomous mode.

In some examples, wherein determining whether or not the vehicle 1 shall use the autonomous mode is based on the estimated SoH of the primary autonomous control system and/or the redundant autonomous control system.

For example, when the SoH indicates that there is not sufficient redundancy in the combination of the primary autonomous control system and the redundant autonomous control system, then it may be determined that autonomous mode shall not be used.

As another example, when the SoH indicates that a quality, e.g., accuracy of measurements or operations, associated with the primary autonomous control system and/or the redundant autonomous control system is below a threshold, then it may be determined that autonomous mode shall not be used.

As another example, when the SoH indicates that a quality, e.g., accuracy of measurements or operations, associated with the primary autonomous control system is greater than the redundant autonomous control system, then it may be determined that autonomous mode shall use the primary autonomous control system for controlling the vehicle 1 in the autonomous mode.

As another example, when the SoH indicates that a quality, e.g., accuracy of measurements or operations, associated with the redundant autonomous control system is greater than the primary autonomous control system, then it may be determined that autonomous mode shall use the redundant autonomous control system for controlling the vehicle 1 in the autonomous mode.

In some examples, determining whether or not the vehicle 1 shall use the autonomous mode may be based on the estimated SoH of the driver intervention system. This means that if the SoH of the driver intervention system indicates that there may be a malfunction in the driver intervention system, or a risk thereof such as a risk above a threshold, then it may be determined that the autonomous mode shall not be used.

For example, when there is a detected fault in the driver intervention system it may be determined that the autonomous mode shall not be used.

For example, when it is diagnosed that the driver intervention system has problems with the ability to receive the one or more signals, e.g., the driver intervention system is malfunctioning or at risk of malfunctioning, then it may be determined that the autonomous mode shall not be used.

### Action 203

The method may further comprise, when the vehicle 1 is configured in the autonomous mode, and when determined that the vehicle 1 shall not use the autonomous mode, triggering a handover procedure of control of the motion of the vehicle 1 to an operator of the vehicle 1.

Triggering the handover procedure may further comprise triggering an alert prior to or during the handover procedure, e.g., by triggering alert lights in the vehicle 1 to notify the operator.

The handover procedure may further be set to be performed after a set time after triggering the handover procedure. The handover procedure may comprise notifying the operator. The handover procedure may comprise maintaining a trajectory for a set period of time during said handover procedure. This may be referred to as a smooth handover.

### Action 204

The method may further comprise, when determined that the vehicle 1 shall not use the autonomous mode and the vehicle 1 is configured in an operator controlled mode, in response to detecting an attempt to switch to the autonomous mode, refraining from switching to the autonomous mode.

In other words, the vehicle will not switch to the autonomous mode when determined it shall not, e.g., such as when the driver intervention system is malfunctioning.

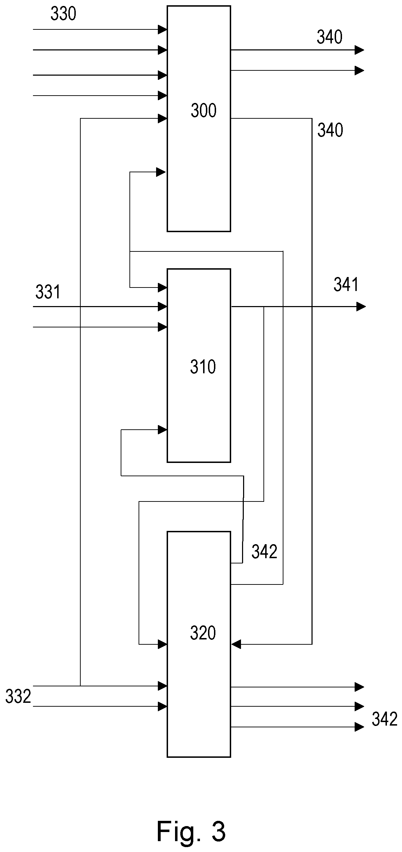

**FIG. 3** is a block diagram illustrating some of the one or more control systems of the vehicle and example inputs and outputs. In FIG.3, an example **driver intervention system 300,** an **autonomy mode capability control system 310,** and **a mode manager control system 320,** e.g., as an example of the one or more controls systems.

The driver intervention system 300 may be the driver interventions system as discussed in any of the above examples.

The autonomy mode capability control system 310 may be a control system which may be configured to determine whether or not the vehicle is capable of safely using the autonomous mode.

The mode manager control system 320 may be a control system which may be configured to determine whether or not the vehicle shall use the autonomous mode, e.g., which may perform the action 202. Additionally or alternatively, when determined that the vehicle 1 can and/or shall use the autonomous mode, e.g., as initiated by the operator, the mode manager control system 320 may trigger the handover procedure to autonomous mode, e.g., as in action 203. Additionally or alternatively, when determined that the vehicle 1 shall not use the autonomous mode, e.g., as determined by action 202, the mode manager control system 320 may refrain from triggering the handover procedure to autonomous mode, e.g., as in action 204.

The one or more control systems may relate to any suitable input parameters, some may be the one or more signals of actions above. The resulting output parameters of any of the one or more controls systems may be used in any suitable manner by the vehicle 1 and/or by the one or more control systems as input parameters.

For example, the driver intervention system 300 may receive and/or use any one or more out of the following **input parameters 330:**
- Steering wheel torque,
- Acceleration pedal position,
- Brake pedal position,
- One or more switches or inputs associated with controlling parking brakes and/or trailers of the vehicle 1, and
- Any one or more other operator input for controlling vehicle motion.

A vehicle mode parameter may be received as an input parameter 330 from one or more output parameters 342 of the mode manager control system 320.

For example, the driver intervention system 300 may then determine whether or not the operator wish to take over from the autonomous mode based on one or more inputs such as the one or more input parameters 330, and then the driver intervention system 300 may produce one or more signals as **output 331;** a signal indicating whether or not driver intervention is detected. The driver intervention system 300 may in some examples further produce a signal indicating whether or not the driver intervention system is active, e.g., for alerting or indicating to an operator whether or not the driver intervention system is active.

The autonomy mode capability control system 310 may receive and/or use any suitable input such as one or more out of the following **input parameters 331:**
- Steering control mode, e.g., whether or not and/or how the vehicle 1 steering is controlled,
- Management motion mode, e.g., how a motion of the vehicle 1 is controlled,
- A vehicle mode requirement, e.g., whether or not a certain mode is required to be used or not allowed to be used such as autonomous mode or operator controlled mode.

A vehicle mode parameter may be received as an input parameter 331 from one or more output parameters 342 of the mode manager control system 320.

A driver intervention output signal 340 may be received as an input parameter 331, e.g., inferring that the operator will take over thus meaning that autonomous mode shall not be used.

A block autonomous mode signal, e.g., whether or not autonomous mode shall be allowed, may be received as an input parameter 330 from one or more output parameters 342 of the mode manager control system 320.

The autonomy mode capability control system 310 may produce an output signal 341 indicating a certain vehicle mode or capability thereof such as autonomous mode or operator controlled mode.

**The mode manager control system 320** may receive and/or use any one or more out of the following **input parameters 332:**
Motion mode, e.g., motion of the vehicle 1, is the vehicle 1 travelling longitudinal, is the vehicle 1 in an autonomous mode or operator controlled mode,
SoH of any the one or more control systems, e.g., any one or more of the driver intervention system 300, the autonomy mode capability control system 310, and the mode manager control system 320.

A vehicle mode requirement, e.g., same input as for input 331, may also be received as an input for the mode manager control system 320.

A vehicle capability parameter be received as an input parameter 332 from one or more output parameters 341 of the autonomy mode capability control system 310, e.g., indicative of any suitable capabilities of the vehicle 1 such as capability of using the autonomous mode.

The mode manager control system 320 may further produce a number of output signals such as any **one or more output signals 342:**
- a block autonomous mode signal, e.g., used as input above,
- a lateral control mode requirement signal, e.g., whether or not the vehicle is or is in need of being laterally controlled and/or how,
- a longitudinal control mode requirement signal, e.g., whether or not the vehicle is or is in need of being laterally controlled and/or how,

In other words, as discussed above and illustrated in FIG. 3. Examples herein may relate to software solutions, e.g., as in the computer-implemented method above, for allowing the ADS control the vehicle 1 in a safe manner. The method may, besides examples and actions as exemplified above, alternatively or additionally further comprise any one or more out of:
- Monitoring autonomous capability and/or health of the vehicle 1,
- Detecting and/or monitoring a presence of an operator, e.g., human driver, in the vehicle 1,
- Validating ADS input, e.g., by using predefined heuristics,
- Based on autonomous capability of the vehicle, triggering and/or allowing the ADS to control the vehicle 1,
- If the vehicle becomes unsafe by using redundant systems such as the redundant autonomous control system above, triggering a safe handling coordinator system or procedure,
- Allowing an operator of the vehicle 1 to disengage autonomous driving using pedals, steering wheel, and other items, e.g., using the control interfaces 11,
- Handling redundancy in the vehicle by synchronizing the primary autonomous control system and the redundance autonomous control system,
- Entering autonomous driving in a robust manner such that the operator, i.e., driver, does not unintentionally trigger Autonomous mode disengagement while preparing to let go of the one or more control interfaces 11.

As a summary of some examples of signal flows and architecture, the examples herein may comprise any one or more out of the following:
- An ADS configured to request autonomous driving based on a capability feedback of the vehicle 1,
- A ModeManager unit, e.g., the mode manager control system 320 which may be configured to monitor status from vehicle 1,
- An AutonomyModeCapability unit, e.g., the autonomy mode capability control system 310, may be configured to monitor the autonomous capability of the vehicle 1,
- An InterventionDetector unit, e.g., the driver intervention system 300, may be configured to monitor if an operator, i.e., driver, of the vehicle 1 wants to disengage to manual driving, i.e., operator controlled mode,
- The ModeManager unit may further be configured to decide on if to have autonomous driving based on monitor results and ADS requests. Based on the decision, the ModeManager may activate the autonomous control of the vehicle 1.

**FIG. 4** is another view of **FIG. 1****,** according to an example. The computer system 600 comprises processing circuitry 602 configured to manage the vehicle 1 comprising an ADS. The ADS is configured to control the motion of the vehicle 1 when the vehicle 1 is configured in an autonomous mode. The processing circuitry 602 is configured to estimate SoH of one or more control systems of the vehicle 1. The one or more control systems are configured to control the use of the autonomous mode. The processing circuitry 602 is configured to, based on the estimated SoH, determine whether or not the vehicle 1 shall use the autonomous mode.

**FIG. 5** is a flow chart of a computer-implemented method for managing the vehicle 1 comprising an ADS according to an example. The ADS is configured to control the motion of the vehicle 1 when the vehicle 1 is configured in an autonomous mode. The method may comprise the following actions which may be combined with any example or action herein, in any suitable manner.

### Action 501

The method comprises, by a processing circuitry 602 of a computer system 600, estimating SoH of one or more control systems of the vehicle 1. The one or more control systems are configured to control the use of the autonomous mode.

### Action 502

The method comprises, by the processing circuitry 602 and based on the estimated SoH, determining whether or not the vehicle 1 shall use the autonomous mode.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20, which examples may be combined with any one or more of the above examples in any suitable manner.
**Example 1.** A computer system 600 comprising processing circuitry 602 configured to manage a vehicle 1 comprising an Automated Driving System, ADS, wherein the ADS is configured to control the motion of the vehicle 1 when the vehicle 1 is configured in an autonomous mode, the processing circuitry 602 further being configured to:
   - estimate State of Health, SoH, of one or more control systems of the vehicle 1, the one or more control systems being configured to control the use of the autonomous mode,
   - based on the estimated SoH, determine whether or not the vehicle 1 shall use the autonomous mode.
**Example 2.** The computer system 600 of Example 1, wherein the processing circuitry 602 is further configured to:
   - when the vehicle 1 is configured in autonomous mode, and when determined that the vehicle 1 shall not use the autonomous mode, trigger a handover procedure of control of the motion of the vehicle 1 to an operator of the vehicle 1.
**Example 3.** The computer system 600 of Example 1 or 2, wherein the processing circuitry 602 is further configured to:
   - when determined that the vehicle 1 shall not use the autonomous mode and the vehicle 1 is configured in an operator controlled mode, in response to detecting an attempt to switch to the autonomous mode, refrain from switching to the autonomous mode.
**Example 4.** The computer system 600 of any of Examples 1-3, wherein the one or more control systems comprises a primary autonomous control system and a redundant autonomous control system, the processing circuitry 602 is further configured to:
   - estimate the SoH of the one or more control systems by estimating the SoH of the primary autonomous control system and/or the redundant autonomous control system, and
   - based on the estimated SoH of the primary autonomous control system and/or the redundant autonomous control system, determine whether or not the vehicle 1 shall use the autonomous mode.
**Example 5.** The computer system 600 of any one of Examples 1-4, wherein the one or more control systems comprises a driver intervention system 300 arranged to control a switch from the autonomous mode to an operator controlled mode, and wherein the processing circuitry 602 is further configured to:
   - estimate the SoH of the one or more control systems by estimating the SoH of the driver intervention system 300, and
   - based on the estimated SoH of the driver intervention system 300, determine whether or not the vehicle 1 shall use the autonomous mode.
**Example 6.** The computer system 600 of any one of Examples 5, wherein the driver intervention system 300 is arranged to control the switch from the autonomous mode to the operator controlled mode, by receiving one or more signals issued by one or more control interfaces 11 of the vehicle 1 wherein the one or more signals are issued in response to the operator interacting with said one or more control interfaces 11.
**Example 7**. The method of Example 6 wherein the processing circuitry 602 is configured to estimate the SoH of the driver intervention system 300 by diagnosing an ability of the driver intervention system 300 to receive the one or more signals.
**Example 8.** The method of Example 6 or 7 wherein the processing circuitry 602 is configured to estimate the SoH of the driver intervention system 300 by detecting that the one or more signals indicate a fault associated with the one or more control interfaces 11.
**Example 9.** The computer system 600 of any one of Examples 6-8, wherein the one or more control interfaces 11 comprises one or more pedals and/or a steering wheel of the vehicle 1, and wherein receiving the one or more signals issued by one or more control interfaces 11 comprises receiving values of one or more pedal positions of the one or more pedals and/or receiving values of a steering wheel torque.
**Example 10.** The computer system 600 of any one of Examples 9, wherein the processing circuitry 602 is configured to estimate the SoH of the driver intervention system 300 by being configured to detect whether or not the one or more pedal positions and/or the steering wheel torque comply with predefined heuristics.
**Example 11.** A vehicle comprising an Automated Driving System, ADS, wherein the ADS is configured to control the motion of the vehicle 1 when the vehicle 1 is configured in an autonomous mode, the vehicle 1 further comprises and/or is controlled by the computer system 600 according to any of Examples 1-10.
**Example 12.** The vehicle according to Example 11 comprising a primary autonomous control system and a redundant autonomous control system, wherein when the vehicle 1 is configured in the autonomous mode, the redundant autonomous control system is arranged to be used as a redundant system if the primary autonomous control system is fails.
**Example 13.** The vehicle according to Example 11 or 12 comprising a driver intervention system 300 arranged to control a switch from the autonomous mode to an operator controlled mode.
**Example 14.** A computer-implemented method for managing a vehicle 1 comprising an Automated Driving System, ADS, wherein the ADS is configured to control the motion of the vehicle 1 when the vehicle 1 is configured in an autonomous mode, the method comprising:
   - by a processing circuitry 602 of a computer system 600, estimating 201, 501 State of Health, SoH, of one or more control systems of the vehicle 1, the one or more control systems being configured to control the use of the autonomous mode,
   - by the processing circuitry 602 and based on the estimated SoH, determining 202, 502 whether or not the vehicle 1 shall use the autonomous mode.
**Example 15.** The method of Example 14 further comprising:
   - by the processing circuitry 602, when the vehicle 1 is configured in autonomous mode, and when determined that the vehicle 1 shall not use the autonomous mode, triggering 203 a handover procedure of control of the motion of the vehicle 1 to an operator of the vehicle 1.
**Example 16.** The method of Example 14 or 15 further comprising:
   - by the processing circuitry 602, when determined that the vehicle 1 shall not use the autonomous mode and the vehicle 1 is configured in an operator controlled mode, in response to detecting an attempt to switch to the autonomous mode, refraining 204 from switching to the autonomous mode.
**Example 17.** The method of any of Examples 14-16, wherein the one or more control systems comprises a primary autonomous control system and a redundant autonomous control system and wherein estimating 201 the SoH of the one or more control systems comprises estimating the SoH of the primary autonomous control system and/or the redundant autonomous control system, and wherein determining 202 whether or not the vehicle 1 shall use the autonomous mode is based on the estimated SoH of the primary autonomous control system and/or the redundant autonomous control system.
**Example 18.** The method of any of Examples 14-17, wherein the one or more control systems comprises a driver intervention system 300 arranged to control a switch from the autonomous mode to an operator controlled mode, and wherein estimating 201 the SoH of the one or more control systems comprises estimating the SoH of the driver intervention system 300, and wherein determining 202 whether or not the vehicle 1 shall use the autonomous mode is based on the estimated SoH of the driver intervention system 300.
**Example 19.** A computer program product comprising program code for performing, when executed by the processing circuitry 602, the method of any of Examples 14-18.
**Example 20.** A non-transitory computer-readable storage medium comprising instructions, which when executed by the processing circuitry (602), cause the processing circuitry (602) to perform the method of any of claims 14-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to manage a vehicle (1) comprising an Automated Driving System, ADS, wherein the ADS is configured to control the motion of the vehicle (1) when the vehicle (1) is configured in an autonomous mode, the processing circuitry (602) further being configured to:
- estimate State of Health, SoH, of one or more control systems of the vehicle (1), the one or more control systems being configured to control the use of the autonomous mode,
- based on the estimated SoH, determine whether or not the vehicle (1) shall use the autonomous mode.

2. The computer system (600) of claim 1, wherein the processing circuitry (602) is further configured to:
- when the vehicle (1) is configured in autonomous mode, and when determined that the vehicle (1) shall not use the autonomous mode, trigger a handover procedure of control of the motion of the vehicle (1) to an operator of the vehicle (1).

3. The computer system (600) of claim 1 or 2, wherein the processing circuitry (602) is further configured to:
- when determined that the vehicle (1) shall not use the autonomous mode and the vehicle (1) is configured in an operator controlled mode, in response to detecting an attempt to switch to the autonomous mode, refrain from switching to the autonomous mode.

4. The computer system (600) of any of claims 1-3, wherein the one or more control systems comprises a primary autonomous control system and a redundant autonomous control system, the processing circuitry (602) is further configured to:
- estimate the SoH of the one or more control systems by estimating the SoH of the primary autonomous control system and/or the redundant autonomous control system, and
- based on the estimated SoH of the primary autonomous control system and/or the redundant autonomous control system, determine whether or not the vehicle (1) shall use the autonomous mode.

5. The computer system (600) of any one of claims 1-4, wherein the one or more control systems comprises a driver intervention system (300) arranged to control a switch from the autonomous mode to an operator controlled mode, and wherein the processing circuitry (602) is further configured to:
- estimate the SoH of the one or more control systems by estimating the SoH of the driver intervention system (300), and
- based on the estimated SoH of the driver intervention system (300), determine whether or not the vehicle (1) shall use the autonomous mode.

6. The computer system (600) of any one of claims 5, wherein the driver intervention system (300) is arranged to control the switch from the autonomous mode to the operator controlled mode, by receiving one or more signals issued by one or more control interfaces (11) of the vehicle (1) wherein the one or more signals are issued in response to the operator interacting with said one or more control interfaces (11).

7. The method of claim 6 wherein the processing circuitry (602) is configured to estimate the SoH of the driver intervention system (300) by diagnosing an ability of the driver intervention system (300) to receive the one or more signals.

8. The method of claim 6 or 7 wherein the processing circuitry (602) is configured to estimate the SoH of the driver intervention system (300) by detecting that the one or more signals indicate a fault associated with the one or more control interfaces (11).

9. The computer system (600) of any one of claims 6-8, wherein the one or more control interfaces (11) comprises one or more pedals and/or a steering wheel of the vehicle (1), and wherein receiving the one or more signals issued by one or more control interfaces (11) comprises receiving values of one or more pedal positions of the one or more pedals and/or receiving values of a steering wheel torque.

10. The computer system (600) of any one of claims 9, wherein the processing circuitry (602) is configured to estimate the SoH of the driver intervention system (300) by being configured to detect whether or not the one or more pedal positions and/or the steering wheel torque comply with predefined heuristics.

11. A vehicle comprising an Automated Driving System, ADS, wherein the ADS is configured to control the motion of the vehicle (1) when the vehicle (1) is configured in an autonomous mode, the vehicle (1) further comprises and/or is controlled by the computer system (600) according to any of claims 1-10.

12. The vehicle according to claim 11 wherein the vehicle comprises a primary autonomous control system and a redundant autonomous control system, wherein when the vehicle (1) is configured in the autonomous mode, the redundant autonomous control system is arranged to be used as a redundant system if the primary autonomous control system is fails; and/or wherein the vehicle comprises a driver intervention system (300) arranged to control a switch from the autonomous mode to an operator controlled mode.

13. A computer-implemented method for managing a vehicle (1) comprising an Automated Driving System, ADS, wherein the ADS is configured to control the motion of the vehicle (1) when the vehicle (1) is configured in an autonomous mode, the method comprising:
- by a processing circuitry (602) of a computer system (600), estimating (201, 501) State of Health, SoH, of one or more control systems of the vehicle (1), the one or more control systems being configured to control the use of the autonomous mode,
- by the processing circuitry (602) and based on the estimated SoH, determining (202, 502) whether or not the vehicle (1) shall use the autonomous mode.

14. A computer program product comprising program code for performing, when executed by the processing circuitry (602), the method of claim 13.

15. A non-transitory computer-readable storage medium comprising instructions, which when executed by the processing circuitry (602), cause the processing circuitry (602) to perform the method of claim 13.
